# EUROPEAN PATENT APPLICATION

(11) **EP 4 752 529 A1**
(43) Date of publication of application: **03.06.2026**
(21) Application number: 24216088.5
(22) Date of filing: 28.11.2024
(51) Int. Cl.: G01N 17/04, C09D 5/22, C09K 11/00, G01N 21/77, H01F 27/00

(54) **ELECTRIC SYSTEM AND CORROSION DETERMINATION METHOD**

(71) Applicant: Hitachi Energy Ltd, 8050 Zürich (CH)
(72) Inventor: Zhang, Hui, 100101 Beijing (CN); Wang, Yang, 100077 Beijing (CN); Meng, DeLun, 100018 Beijing (CN)
(74) Representative: Epping - Hermann - Fischer

(57) **Abstract**

In one embodiment, the electric system (1) comprises a static electric induction device (2) and a corrosion-sensitive coating (31), wherein
- the electric system (1) further comprises a protective coating (4) to protect a component (21, 22, 23, 24, 25) of the electric system (1) from an exterior (A) of the electric system (1),
- the corrosion-sensitive coating (31) comprises a luminescent material (30) and is applied on a substrate (34) of the component so that the corrosion-sensitive coating (31) is located between the substrate (34) and the protective coating (4), and
- the luminescent material (30) is configured to emit luminescence (L) upon activation by at least one of a change of a pH value or occurrence of metal ions caused by corrosion of the substrate (34) so that the corrosion-sensitive coating (31) is configured to provide information about a corrosion state of the component.

## Description

An electric system is provided. A corrosion determination method using such an electric system is also provided.

Document CN 100 503 745 C refers to a coating for detecting corrosion.

Document WO 2006/120389 A1 refers to a corrosion detection probe and a method of corrosion detection at both a bare metal substrate and a coated metal substrate.

Document Chao Chen et al., "A review of fluorescence based corrosion detection of metals" in Corrosion Communications, volume 6, June 2022, pages 1 to 15, https://doi.org/10.1016/j.corcom.2021.11.009, discusses that fluorescence based corrosion detection has been proposed as a prospective monitoring method for the initial corrosion of metals due to its high sensitivity, non-destructive, in situ and real-time detection, and a comprehensive and updated review on the fluorescence based corrosion detection of metals is provided. The principles of fluorescence based corrosion detection are introduced according to the corrosion processes of metals. Fluorescent indicators in corrosion detection are classified into pH and metal ion sensitive indicators, which show fluorescence response either by the pH variation or the presence of metallic cations as an early warning for corrosion initiation.

A problem to be solved is to provide an electric system in which damage due to corrosion in a harsh environment can efficiently be detected.

This object is achieved, inter alia, by an electric system and by a corrosion determination method as defined in the independent claims. Exemplary further developments constitute the subject-matter of the dependent claims.

For example, a fluorescent substance sensitive to pH or to occurrence of metal ions is coated onto a metal substrate below a protective coating of an electric system, like a transformer system. The metal substrate may be a hull of a transformer tank or the like. If the protective coating is damaged, the fluorescent substance becomes active and indicates the damage by means of its fluorescence.

For example, the electric system and the method described herein are applicable to transformers which are exposed to harsh environmental conditions or which have a high-level requirement of early corrosion detection.

Corrosion is a main cause of failures of product enclosures or external devices due to the highly corrosive environmental conditions, for example, the salinity, humidity, solar radiation and so on. Since most of the transformer products are installed far away from a city or in specific locations, a large amount of effort for maintenance and inspection is required, especially for offshore wind applications. In some conditions, it is difficult and time consuming for the inspectors to check the coating appearance on site. The undetected or untreated corrosion can lead to a considerable decrease in the integrity and strength of, for example, transformer tanks which in turn may have significant economic and safety implications. So, a self-warning system which can detect the early corrosion in situ with high precision is very necessary.

Generally, the visual inspection is the most used method in outdoor applications. But due to the limitation of geographical location, equipment layout, flaw size, and surface coloring or staining, it is difficult to have the full-scale examination during the visual inspections. For the last two decades, there has been a tremendous amount of research focused on corrosion sensing technology which aims to address the corrosion status monitoring or corrosion warning function with the direct measurement, commonly using various kinds of corrosion sensors, or indirect measurement such as temperature, dissolved oxygen, deposition monitoring. In most conditions, different monitoring techniques have advantages and drawbacks, for example, an embedded sensor may destroy the coating integrity and cause premature failure of coatings; the external sensor performance will strongly be influenced by the installation locations, for example. So, a full-scale self-warning method as described herein can be more effective during the outdoor application.

The self-warning system for early corrosion detection described herein is composed of two parts: a fluorescent coating for corrosion diagnosis and the inspection device to detect if corrosion is present. A fluorescent coating system is a well-designed multi-layer structure with the ability of identifying the pH changes or metal ions which result from the corrosion of substrate materials when the protective coating is damaged. The inspection system is using, for example, specified cameras which can detect the fluorescence.

By using the self-warning system, the early failure of coating can be detected efficiently with a remote or periodic inspection mode.

For the fluorescent coating, fluorescent probe materials can be selected with the ability of recognizing the pH changes or metal ions, like Fe³⁺ and/or Al³⁺. The fluorescent probes may comprise one or a plurality of substances.

In practical applications, a multi-layer structure can be used which comprises, for example, an indicative coating and one or a plurality of protection layers, like two protection layers. The indicative coating is coated on the substrate metal surfaces which may be done by direct dispersion of fluorescent probes or microcapsules wrapped fluorescent probes. It is optionally possible that a primer may be used to enhance an adhesion between a substrate material and the indicative coating. A protective coating is added on top of the indicative coating to further enhance the corrosion prevention and sealing functions.

An optional fluorescence inspection device may provide excitation radiation in the ultraviolet radiation or anywhere in the wavelength range from 200 nm to 800 nm, and may also provide an inspection function of emitted fluorescence. A data transmission method can be used according to actual requirements, such as cables, Wi-Fi, or Bluetooth.

Thus, a remote inspection solution for corrosion monitoring of, for example, transformers is provided which can be applied in harsh environments. By using this self-warning system, the following advantages can be achieved, individually or in any combination:
- Specific selectivity and fast response can be reached compared with traditional corrosion detection techniques, such as weight loss, electrochemistry, noise, X-ray, and guided ultrasound.
- High sensitivity and accuracy is enabled to identify corrosion on the micro-scale so that an initial corrosion can be detected and early warning for timely maintenance is possible.
- A full-scale monitoring of transformer products is possible without any limitations of installation locations. This can reduce the risk of missed inspection caused by position limitations.
- The self-waring system can provide a remote inspection where it is difficult to do the manual corrosion examination frequently, for example, in an offshore wind farm or high-altitude applications. The remote function can also reduce the cost of inspection in field.

Thus, a remote self-warning system for detecting early corrosion of metal substrates is provided that uses a fluorescent coating system and fluorescence inspection devices. The fluorescent coating may comprise fluorescent probes which can indicate the pH changes or metal ions generated by the corrosion of substate metals. The fluorescent probes can be added directly into the coating systems or wrapped by microcapsules to keep the sensitivity and prevent premature reaction with protective coating systems. The protective coating system can be a multi-layer structure which has an indicative coating and a protective coating; the indicative coating may directly be sprayed on substrate metals, and the protective coating is coated on top of the indicative coating, for example. The fluorescence inspection device which may send out radiation in the wavelength of 200 nm to 800 nm, like UV radiation, and may detect the emitted fluorescence from the fluorescent coating. For example, the fluorescence inspection device can be a specified camera or spectrometer which contains a power supply and a data transmission system, for example. The data transmission can be realized by using cables, Wi-Fi, or Bluetooth.

It is possible to disperse the fluorescent probes in different coating systems. A fluorescence strength may depend on different substrate metals and the recognition accuracy may thus be increased.

In at least one embodiment, the electric system comprises a static electric induction device and a corrosion-sensitive coating, like the indicative coating. The electric system further comprises a protective coating to protect a component of the electric system, like a transformer tank, from an exterior of the electric system. The corrosion-sensitive coating comprises one or a plurality of luminescent materials and is applied on a substrate of the component so that the corrosion-sensitive coating is located between the substrate and the protective coating. The luminescent material is configured to emit luminescence upon activation by at least one of a change of a pH value or occurrence of metal ions caused by corrosion of the substrate so that the corrosion-sensitive coating is configured to provide information about a corrosion state of the component.

The luminescent material may be a fluorescent material or a phosphorescent material or may show both fluorescence and phosphorescence.

For example, the substrate is a hull of the component.

The static electric induction device, like the transformer, may be supplemented by or replaced with an electric shunt reactor or an electric series reactor, an instrument transformer, a capacitor, a disconnector, an air-insulated switchgear, AIS, a gas insulated switchgear, GIS, and/or a gas insulated transmission line, GIL. That is, the term 'static electric induction device, may analogously read on any power electronic device configured to handle currents of at least 0.1 kA and/or of at least 3.6 kV, for example. Hence, all the embodiments and examples described herein may not only refer to an electric system comprising the static electric induction device and especially the corrosion-sensitive coating or the corrosion sensor but in the same manner also to an electric system comprising a power electronic device, like the electric reactor, instrument transformer, capacitor, disconnector, AIS, GIS, and/or GIL or the like, and the corrosion-sensitive coating or the corrosion sensor.

According to at least one embodiment, before the corrosion of the substrate starts, the luminescent material is inactive. In other words, just because of the corrosion the luminescent material is changed in its chemical composition and/or in its structural formula to become luminescent. This change is triggered, for example, by the pH change and/or the occurrence of the metal ions caused by the corrosion of the substrate and/or caused by a solvent like water. Hence, it is possible that under defined excitation conditions, like illuminating the luminescent material in a defined spectral range, luminescence occurs only after the protective coating has been damaged and/or after the corrosion of the substrate has been started. By having such a luminescent material, false alarms and filtering of luminescence and, thus, an error rate can be reduced.

According to at least one embodiment, in an intended use of the electric system the exterior is a gas. For example, the gas comprises oxygen and water vapor. Especially, the gas is air over sea water. Thus, the exterior may also contain one or a plurality of chlorine, sulfur dioxide or sodium. Hence, the corrosion-sensitive coating or the corrosion sensor may provide the corrosion information for the typical environment the electric system is used in the field.

For example, the static electric induction device is a transformer so that the electric system could be a transformer system. Accordingly, the component may possibly be selected from the following group: transformer tank that may house the transformer, radiator, conservator tank, control box, bushing turret. There can be more than one of said components in the electric system, like all the aforementioned components. It is also possible that the electric system comprises more than one static electric induction device, that is, more than one transformer, for example.

According to at least one embodiment, the corrosion-sensitive coating is a primer coating the luminescent material is added to. That is, the corrosion-sensitive coating may have a function of both indicating corrosion and improving adhesion between the substrate and the protective coating. It is possible that the primer coating is for aluminum or steel as the substrate. For example, the primer coating is based on an acrylic material, a polyurethane material and/or an epoxy resin material.

It is possible that the luminescent material is homogeneously distributed in the corrosion-sensitive coating, like the primer coating. Otherwise precipitation of the luminescent material may occur. The luminescent material may be dissolved in the corrosion-sensitive coating, or the luminescent material has the form of particles or pigments dispersed in a matrix material of the corrosion-sensitive coating. The luminescent material may directly be exposed to the matrix material of the corrosion-sensitive coating, or the luminescent material is encapsulated in the particles so that the particles may be of a core-shell design with the luminescent material as the core. Otherwise, the luminescent material may be used as a shell material onto the core to improve dispersibility.

According to at least one embodiment, the substate consists of or comprises at least one of iron or aluminum. For example, the substrate is an aluminum sheet or a steel sheet.

According to at least one embodiment, the protective coating and/or the substrate is free of the luminescent material. Thus, the luminescent material can be limited to the corrosion-sensitive coating, like the primer coating.

According to at least one embodiment, the corrosion-sensitive coating further comprises one or a plurality of the following: a polyolefin or a modified polyolefin, a silane, a cyanate, a phosphate. By using such materials, the luminescent material may well be dispersed or dissolved in the corrosion-sensitive coating.

According to at least one embodiment, the electric system further comprises one or a plurality of intermediate coatings. The at least one intermediate coating is located between the corrosion-sensitive coating and the protective coating, especially directly between the corrosion-sensitive coating and the protective coating. By having such at least one intermediate coating, the corrosion-sensitive coating may additionally be protected from corrosion effects so that premature alarms may be avoided. Further, by means of the intermediate coating the luminescent material may be separated from the protective coating so that the corrosion-sensitive coating carrying the luminescent material does not need to be compatible with the protective coating.

According to at least one embodiment, the intermediate coating is free of the luminescent material. For example, the intermediate coating consists of or comprises one or a plurality of the following: an epoxide, a polyurethane.

According to at least one embodiment, the luminescent material is an organic material. Otherwise, the luminescent material could also be an inorganic material, like an oxide, nitride or oxynitride.

According to at least one embodiment, the luminescent material is pH-sensitive and comprises or is one or a plurality of the following: triphenylmethane, TPM for short; coumarin; fluorescein-5-isothiocyanate, FITC for short; FD1; 5,6-carboxy fluorescein; salicylic acid, eosin.

According to at least one embodiment, the luminescent material is sensitive to the occurrence of metal ions, like at least one of Fe²⁺, Fe³⁺ or Al³⁺, and comprises or is one or a plurality of the following: alizarin; lumogallion; morin; 0,0'-dihydroxyazobenzene, dhab for short; 8-hydroxyquinoline; 8-hydroxyquinolone-5-sulphonic acid hydrate, 8-HQS for short.

Moreover, the materials referred to in document Chao Chen et al. as cited above may be used. The disclosure content of Chao Chen et al. concerning fluorescent materials is hereby incorporated by reference.

According to at least one embodiment, the electric system further comprises a corrosion sensor. The corrosion sensor comprises the luminescent material and further comprises at least one of a photo receiver or an excitation source. The photo receiver together with the excitation source may also be referred to as the fluorescence inspection device.

According to at least one embodiment, the excitation source is configured to illuminate the luminescent material with excitation radiation. For example, the excitation radiation has a peak wavelength of at least 200 nm or of at least 290 nm or of at least 320 nm or of at least 365 nm. Alternatively or additionally, said peak wavelength could be at most 800 nm or at most 520 nm or at most 410 nm. For example, the excitation radiation is broadband radiation with a spectral range at full width at half maximum, FWHM, of at least 50 nm, or the excitation radiation is narrowband radiation with a spectral range at FWHM of at most 10 nm.

According to at least one embodiment, the photo receiver is configured to detect the luminescence from the luminescent material caused, for example, by the excitation radiation upon the corrosion of the substrate. The excitation radiation is preferably from the excitation source but could otherwise also be from a natural source, like sun light.

According to at least one embodiment, the photo receiver is or comprises a photo diode, a PIN diode, a CCD chip, a camera, an avalanche diode. It is possible that the photo receiver is equipped with at least one spectral filter so that the photo receiver may be sensitive only in one or a plurality of wavelength ranges of the luminescence. It is possible that more than one wavelength range is detected in order to achieve better discrimination of background radiation. For example, the at least one wavelength range which is detected has a wavelength of at least 400 nm or of at least 500 nm or of at least 600. Alternatively or additionally, said wavelength is at most 3 µm nm or at most 2 µm nm or at most 800 nm. Said at least one wavelength range could be broadband or narrowband as defined above.

According to at least one embodiment, the protective coating is opaque to at least one of the luminescence and the excitation radiation. Thus, the excitation radiation may reach the luminescent material just after corrosion occurred and after the protective coating has been removed in places. Analogously, the luminescence may be detected only after the protective coating has been removed in places.

According to at least one embodiment, the protective coating is transmissive for at least part of the luminescence and/or for at least part of the excitation radiation. Especially in case of near-infrared luminescence in the spectral range between 3 µm and 800 nm the protective coating may in part be transmissive. Hence, corrosion may be detectable in at a very early stage before the protective coating has been damaged too much. Thus, microcracks may be detectable as well which may not be detectable with visual inspection with the bare human eye.

In principle it is possible that the corrosion-sensitive coating acts as a waveguide for the excitation radiation. This is enabled, for example, as the excitation radiation does not need to be transmitted across long distances but just across some decimeters or meters, and because the luminescent material becomes activated just by means of the corrosion and, thus, may be transparent to the excitation radiation before corrosion.

According to at least one embodiment, the corrosion-sensitive coating is applied directly on the substrate. Hence, the luminescent material may be in direct contact with the substrate or may be close at the substrate. For example, a distance between the luminescent material and the substrate is at most 0.1 mm or is at most 0.01 mm.

According to at least one embodiment, the corrosion-sensitive coating is a homogeneous layer concerning its material composition. This may apply on a scale large enough to average over statistical material variation because of a manufacturing process like spraying that always introduces some variations. Thus, there may be no intentional inhomogeneities in the corrosion-sensitive coating.

According to at least one embodiment, an outward hull of the component is made of the substrate covered by the protective coating. Hence, the substrate may be the part of the component mechanically protecting and/or stabilizing it.

According to at least one embodiment, an area proportion of at least 80% or of at least 90% or of at least 98% or of at least 99.5% of the outward hull is provided with the corrosion-sensitive coating. That is, the outer hull may completely or virtually completely be provided with the corrosion-sensitive coating. Hence, corrosion sensitivity may be achieved all over the outer hull.

According to at least one embodiment, the electric system further comprises a remote communication unit, like a data receiver. Moreover, the corrosion sensor may further comprise a transmitter, like a data transmission unit. The transmitter is configured to send the information about the corrosion state of the protective coating to the remote communication unit. Thus, the information about the corrosion state can wirelessly be sent. Alternatively, the transmitter may send data about the corrosion state, like an image or a recorded spectrum or an intensity plot to the remote communication unit, and the remote communication unit forwards these data to another unit, like a computer, to determine the information about the corrosion state.

According to at least one embodiment, a distance between the remote communication unit and the transmitter is at least 1 km or is at least 10⁴ m. Alternatively or additionally, said distance may be at most 10⁵ m. Thus, the information about the corrosion state or the data of the at least one measured parameter can be sent over a relatively large distance.

A data connection between the remote communication unit and the transmitter could either be a wireless connection or also a wire-based connection.

According to at least one embodiment, the electric system comprises a plurality of the components and a plurality of the corrosion-sensitive coating, and a plurality of the protective coatings. For example, each one of the components is provided with its own protective coating.

According to at least one embodiment, said protective coatings are of different material compositions and/or thicknesses. In other words, depending on the respective requirements the components can individually be coated with protective coatings. It is possible that the same protective coating is used for at least two of the components.

According to at least one embodiment, each one of said components is provided with the luminescent material or with one of a plurality of different luminescent materials. Having a plurality of different luminescent materials enables more distinct corrosion detection as different places within one of the components or between different components may easily be distinguishable. Especially, the different luminescent materials have different luminescence properties, like showing luminescence in different wavelength ranges.

An operating method for the electric system is additionally provided. By means of the method, the electric system as indicated in connection with at least one of the above-stated embodiments can be operated. Features of the electric system are therefore also disclosed for the method and vice versa.

In at least one embodiment, the corrosion determination method is for an electric system and comprises the following steps:
- providing the component, the corrosion-sensitive coating and the protective coating,
- monitoring the corrosion-sensitive coating, and
- outputting the information about the corrosion state of the component.

An electric system and an operating method described herein are explained in greater detail below by way of exemplary embodiments with reference to the drawings. Elements which are the same in the individual figures are indicated with the same reference numerals. The relationships between the elements are not shown to scale, however, but rather individual elements may be shown exaggeratedly large to assist in understanding.

In the figures:
- Figure 1: is a schematic top view of an exemplary embodiment of an electric system described herein,
- Figures 2: to 5 are schematic sectional views of exemplary embodiments of electric systems described herein,
- Figure 6: is a schematic side view of an exemplary embodiment of an electric system described herein,
- Figure 7: is a schematic perspective view of an exemplary embodiment of an electric system described herein,
- Figure 8: is a schematic top of an exemplary embodiment of a corrosion sensor for electric systems described herein, and
- Figure 9: is a schematic block diagrams of an exemplary embodiment of an operating method for electric systems described herein.

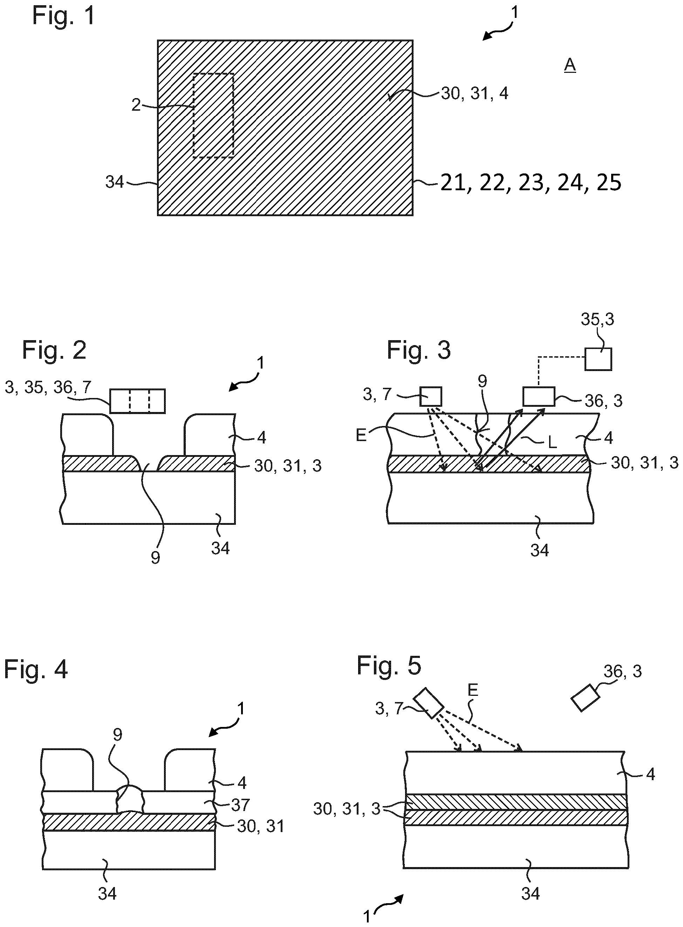

Figure 1 illustrates an exemplary embodiment of an electric system 1. The electric system 1 comprises a static electric induction device 2, for example, a transformer. The static electric induction device 2 may be configured for an electrical power of at least 0.1 MW or of at least 1 MW or at least 10 MW and/or of at most 0.1 GW or at most 1 GW, for example. Further, the electric system 1 comprises one or a plurality of components 21, 22, 23, 24, 25 which may be related to the operation of the static electric induction device 2. By way of example, the component 21 is a transformer tank 21 in which the transformer 2 is placed in an insulating liquid like transformer oil.

The electric system 1 is in an exterior A. For example, the exterior A is air, especially air over seawater. Thus, the exterior A may comprise oxygen, water, chlorine and sodium. Hence, the exterior A may have a relatively high corrosivity for metals like steel.

To protect the at least one component 21, 22, 23, 24, 25 from the exterior A, said component is provided with a protective coating 4 on its outer hull. The outer hull is especially a substrate 34, like a metallic substrate. For example, the substrate 34 is of aluminum or of steel. The protective coating 4 could be an organic lacquer system or paint system, possibly containing a plurality of layers or of just one layer.

Further, the electric system 1 comprises a corrosion-sensitive coating 31. The corrosion-sensitive coating 31 comprises one or a plurality of luminescent materials 30, like fluorophores. The corrosion-sensitive coating 31 is applied on the substrate 34 of the outer hull and is thus below the protective coating 4. It is possible that the corrosion-sensitive coating 31 completely covers the outer hull so that the corrosion-sensitive coating 31 and the protective coating may be congruent.

In Figure 2, a further example of the electric system 1 is illustrated. In this example, in the protective coating 4 there is already a coating damage 9, like a hole caused by the exterior A over time. The damage 9 may completely extend through the protective coating 4 and the corrosion-sensitive coating 31. Because of the corrosion, metal ions from the substrate 34 can occur and/or a pH change happens. It is possible that there is a thin film of an aqueous solution directly at the substrate 34 in the region of the damage 9.

Due to the metal ions and/or the pH change, the luminescent material 30 as originally applied changes its chemical composition and/or in its chemical structural formula and thus becomes a luminophore. That is, prior to said change of composition and/or structure the luminescent material 30 may not yet be a luminophore. Hence, emission of luminescence can be a precise indicator of corrosion. For example, a luminescent material 30 as listed in document Chao Chen et al. as cited above may be used.

For example, the luminescent material 30 is added to a primer which is configured to improve adhesion of the protective coating 4 at the substrate 34. Thus, the corrosion-sensitive coating 31 can be a primer coating. The same applies for all other examples of the electric system 1.

In Figure 2 it is also shown that the electric system 1 can optionally comprise a corrosion sensor 3. One part of the corrosion sensor 3 is the corrosion-sensitive coating 31. Further the corrosion sensor 3 includes a photo receiver 36, like a camera. Possibly, there is an optical filter, not shown, so that the camera may be sensitive to a wavelength range of the luminescence only. As a further option, the corrosion sensor 3 can include an excitation source 7, like a UV lamp. Such a UV lamp could include light-emitting diodes emitting, for example, at 405 nm to cause the luminescence upon corrosion.

Moreover, optionally the corrosion sensor 3 includes an evaluation unit 35. The evaluation unit 35 may create an alarm when corrosion is detected, that is, when luminescence is present. The excitation source 7 and the photo receiver 36 may work in a correlated manner, like using a lock-in amplifying stage in the evaluation unit 35.

The photo receiver 36, the excitation source 7 and/or the evaluation unit 35 may permanently be present. Otherwise, said components may be installed just from time to time or after a time limit. For example, said components may need to be installed just after a couple of years since the electric system 1 has been placed in the field.

Instead of using the photo receiver 36 and the evaluation unit 35, visual inspection may be done.

Otherwise, the same as to Figure 1 may also apply to Figure 2, and vice versa.

According to Figure 2, the protective layer 4 is opaque for the luminescence L from the luminescent material 30 and for the excitation radiation E from the excitation source 7. Contrary to that, in Figure 3 it is shown that the protective layer 4 could be transmissive in at least part of the spectral ranges of the excitation radiation E and the luminescence L. Thus, the damage 9 does not need to be a hole but the luminescence L could also be caused by cracks as the damage 9. Hence, corrosion can be detected at a very early stage of the damage 9.

As a further option, in Figure 3 it is shown that the photo receiver 36, the excitation source 7 and the optional evaluation unit 35 does not need to be a single unit but can be different units placed in different locations next to the substrate 34. The same is possible in all other examples of the electric system 1 as well.

Otherwise, the same as to Figures 1 and 2 may also apply to Figure 3, and vice versa.

In the example of Figure 4 it is illustrated that there is an intermediate coating 37 between the corrosion-sensitive coating 31 and the protective coating 4. Such an intermediate coating 37 can also be present in all the other examples of the electric system 1. By means of the intermediate coating 37, the luminescent material 30 and optionally also the substrate 34 may better be protected from the environment A. Further, because of the intermediate coating 37 the protective coating 4 could be decoupled from the corrosion-sensitive coating 31 so that, for example, damaging the luminescent material 30 during applying the protective coating 4 because of solvents or the like can be avoided or reduced.

Optionally, the luminescent material 30 shows luminescence upon the protective coating 4 has a hole as the damage 9 while the intermediate coating 37 has just cracks. The intermediate coating 37 may thus be transmissive for the luminescence and the excitation radiation. Further optionally, the intermediate coating 37 or otherwise the corrosion-sensitive coating 31 itself may be used as a light guide for the excitation radiation so that the latter may be spread over the corrosion-sensitive coating 31 laterally. This is enabled, for example, as the excitation radiation needs to be transmitted just over some decimeters or meters, and as the luminescent material becomes activated by the corrosion and can be excited to produce luminescence by a relatively small amount of excitation radiation. In this case, corrosion may be detected at a very early stage and the protective coating does not need to be transmissive for the excitation radiation but only for part of the luminescence which could be in the near-infrared spectral range, for example.

As a further possibility, in Figure 4 it is shown that due to the corrosion the corrosion-sensitive coating 31, the substrate 34 and/or the optional intermediate coating 37 may change their volume. For example, a bulge may result, however, recesses are also possible.

Otherwise, the same as to Figures 1 to 3 may also apply to Figure 4, and vice versa.

Optionally, as illustrated in Figure 5, there is a plurality of the luminescent materials 30. The luminescent materials 30 can either be placed in different layers 31 as depicted in Figure 5 or in a single layer.

In this case it is possible that the luminescent materials 30 show luminescence upon different degrees of corrosion of the substrate 34. Thus, not only the occurrence of corrosion but also its degree may be detected. For this purpose, there are the different layers 31 having the different luminescent materials 30, or optionally at least one of the luminescent materials 30 can be contained in particles having a core-shell configuration, and luminescence of said luminescent material 30 may arise only after damage of the shell.

In Figure 5 it is also illustrated that before the damage 9 the excitation radiation E cannot reach the at least one luminescent material 30. Thus, prior to the damage 9 there is no luminescence because of lack of the excitation radiation E at the at least one luminescent material 30. Thus, in this option the luminescence may not need to be triggered by the corrosion but the at least one luminescent material 30 may be able for luminescence from the very beginning when being applied on the substrate 34. Thus, detection of luminescence is limited to the case when the excitation radiation E can reach the at least one luminescent material 30 after the damage 9 occurs.

Otherwise, the same as to Figures 1 to 4 may also apply to Figure 5, and vice versa.

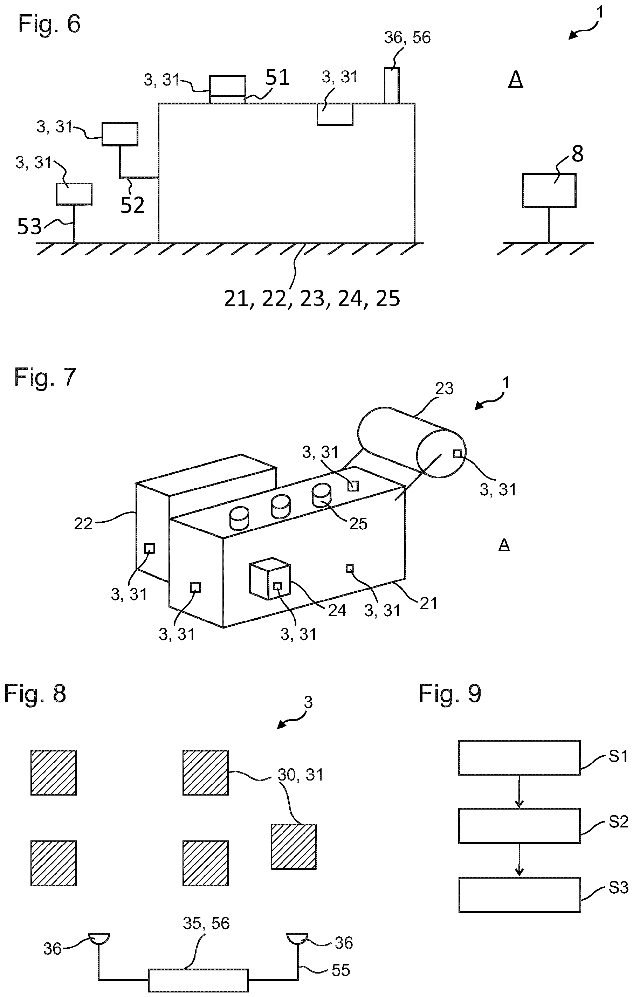

In the example of the electric system 1 of Figure 6 it is shown that there can be a plurality of the corrosion sensors 3 or at least of the corrosion-sensitive coatings 31. The various possibilities shown in Figure 6 apply especially in the case that not the whole component 21, 22, 23, 24, 25 is coated with the at least one corrosion-sensitive coating 31 but is directly applied with the at least one corrosion-sensitive coating 31 only in places or optionally is not at all directly applied with the at least one corrosion-sensitive coating 31. In case of the at least one corrosion-sensitive coating 31 being not directly at the substrate of the component 21, 22, 23, 24, 25, it is possible that the same protective coating 4 as for the component 21, 22, 23, 24, 25 is used to cover the at least one corrosion-sensitive coating 31.

In a first possibility, the corrosion sensor 3 or the corrosion-sensitive coating 31 is integrated in the component 21, 22, 23, 24, 25 and is located directly at the substrate, that is, directly at the outer hull. It is possible that the corrosion-sensitive coating 31 may not be seen at the component 21, 22, 23, 24, 25 with the bare eye until the damage occurs, and the protective coating 4 may thus not show any elevations or roughening or marking in the area of the corrosion-sensitive coating 31. Otherwise, there can be an elevation, recess, roughening and/or marking in the area of the corrosion-sensitive coating 31 so that the location of the corrosion-sensitive coating 31 can easily be found if the corrosion-sensitive coating 31 is applied only locally.

In a second possibility, the respective corrosion sensor 3 or the corrosion-sensitive coating 31 is directly attached to the assigned component 21, 22, 23, 24, 25. For example, there is just a first connection means 51, like an adhesive, between the respective corrosion sensor 3 or the corrosion-sensitive coating 31 and the assigned component 21, 22, 23, 24, 25. For example, a distance between the respective corrosion sensor 3 or the corrosion-sensitive coating 31 and the assigned component 21, 22, 23, 24, 25 is at most 1 cm or is at most 1 mm. Optionally, there is only solid matter between the respective corrosion sensor 3 or the corrosion-sensitive coating 31 and the assigned component 21, 22, 23, 24, 25. For example, the respective corrosion sensor 3 or the corrosion-sensitive coating 31 is an adhesive label directly attached onto the protective coating 4 of the assigned component 21, 22, 23, 24, 25. Thus, the corrosion-sensitive coating 31 does not need to be placed below the protective coating 4 directly at the component 21, 22, 23, 24, 25.

In a third possibility, the respective corrosion sensor 3 or the corrosion-sensitive coating 31 is attached to the assigned component 21, 22, 23, 24, 25 by means of a second connection means 52. For example, the second connection means 52 is a rodding or a bar by means of which the respective corrosion sensor 3 or the corrosion-sensitive coating 31 is attached to the assigned component 21, 22, 23, 24, 25. The second connection means 52 may be applied onto the respective protective coating 4 or may be attached to a mechanical contact point of the assigned component 21, 22, 23, 24, 25. By means of such second connection means 52, the respective corrosion sensor 3 or the corrosion-sensitive coating 31 can be close at the assigned component 21, 22, 23, 24, 25 and can experience the same environmental conditions of the exterior A but may not interfere with the protective coating 4 or the assigned component 21, 22, 23, 24, 25 itself.

In a fourth possibility, the corrosion sensor 3 or the corrosion-sensitive coating 31 is located distant from the assigned component 21, 22, 23, 24, 25. This can be done, for example, by using a holder 53 which is not in direct contact with the assigned component 21, 22, 23, 24, 25. For example, the holder 53 is attached to the ground or a platform the electric system 1 is mounted on.

These four exemplarily possibilities can in any combination be present in all the examples of the electric system 1.

Optionally, the at least one corrosion sensor 3 includes a transmitter 56 and the electric system 1 includes a remote communication unit 8. It is possible that the remote communication unit 8 is located quite far away from the components 21, 22, 23, 24, 25. For example, a distance between the components 21, 22, 23, 24, 25 and the remote communication unit 8 is at least 1 km or is at least 10 km. For example, the remote communication unit 8 is configured to receive signals from the at least one transmitter 56 of the at least one corrosion sensor 3. Thus, for example, if the transformer 2 and the components 21, 22, 23, 24, 25 are placed offshore, the remote communication unit 8 can be placed onshore so that monitoring of the information about the corrosion state can be done onshore, and offshore work is required only if an alarm is issued by the at least one corrosion sensor 3 via the at least one transmitter 56 and the remote communication unit 8. Such a remote communication unit 8 and such at least one transmitter 56 can be present in all other examples of the electric system 1 as well.

Otherwise, the same as to Figures 1 to 5 may also apply to Figure 6, and vice versa.

In Figure 7, another example of the electric system 1 is shown. In this example, the static electric induction device is the transformer which is housed in the transformer tank 21. At the transformer tank 21, optionally there is a radiator 22 for dissipating waste heat and a conservator tank 23 to handle an insulating liquid the transformer 2 is in, or the radiator 22 is located adjacent to the tank 21 but connected with a piping for the insulating liquid. Further, there can be bushing turrets 25 for DC and AC input lines and output lines. A control box 24 can also be present.

These components 21, 22, 23, 24, 25 may have different requirements concerning the protection level against corrosion. Thus, said components 21, 22, 23, 24, 25 may be provided with different protective coatings, not shown in Figure 7. These different protective coatings may be monitored by a plurality of the corrosion sensors 3 or of the corrosion-sensitive coatings 31. In each one of the illustrated locations there can be just the corrosion-sensitive coating 31 or also the full corrosion sensor 3.

In addition to different protective coatings, there can be a plurality of the corrosion sensors 3 or of the corrosion-sensitive coatings 31 at the same component, for example, at the transformer tank 2. By means of such an arrangement, it can be accounted for that corrosion progresses with different rates at different locations of the transformer tank 21, for example, due to different wind conditions or different exposure to seawater and/or salt. The same applies analogously to all other components 22, 23, 24, 25 of the electric system 1.

For example, the outer hull of each one of the components 21, 22, 23, 24, 25 is completely provided with the respective corrosion-sensitive coating 31 wherein all the components 21, 22, 23, 24, 2 have the same corrosion-sensitive coating 31 or there are different types of the corrosion-sensitive coatings 31. Per component 21, 22, 23, 24, 25 there can be a plurality of the photo sensors 36 and the excitation sources 7 to fully optically monitor the respective component 21, 22, 23, 24, 25.

Otherwise, the same as to Figures 1 to 6 may also apply to Figure 7, and vice versa.

In Figure 8 an example of the corrosion sensor 3 is shown in which there is one evaluation unit 35 and optionally one transmitter 56 which is connected to a plurality of the photo receivers 36 and optionally the excitation sources 7, not shown in Figure 8. Hence, there could be a wiring 55 between the respective components. Optionally, there can be a plurality of the corrosion-sensitive coatings 31 monitored by the photo receiver 36 or the photo receivers 36.

Such an arrangement can be present in all the examples of the electric system 1.

Otherwise, the same as to Figures 1 to 7 may also apply to Figure 8, and vice versa.

In Figure 9, an example of a corrosion determination method for the electric system 1 of any one of the above examples is schematically illustrated. In a method step S1, the component 21, 22, 23, 24, 25, the corrosion-sensitive coating 31 and the protective coating 4 are provided. Optionally, the full corrosion sensor 3 is provided.

Then, in method step S2 the corrosion-sensitive coating 31 is monitored, either by manual visual inspection or by using the full corrosion sensor 3. In method step S3, information about the corrosion state of the component 21, 22, 23, 24, 25 is outputted. Thus, measures can be made to account for the corrosion, like further manual visual inspection to verify an optional automatic alarm or doing repair works.

Otherwise, the same as to Figures 1 to 8 may also apply to Figure 9, and vice versa.

The invention described here is not restricted by the description on the basis of the exemplary embodiments. Rather, the invention encompasses any new feature and also any combination of features, which includes in particular any combination of features in the patent claims, even if this feature or this combination itself is not explicitly specified in the patent claims or exemplary embodiments.

### List of Reference Signs

- 1: electric system
- 2: static electric induction device (transformer)
- 20: exterior surface
- 21: transformer tank
- 22: radiator
- 23: conservator tank
- 24: control box
- 25: bushing turret
- 3: corrosion sensor
- 30: luminescent material
- 31: corrosion-sensitive coating (primer coating)
- 34: substrate
- 35: evaluation unit
- 36: photo receiver
- 37: intermediate coating
- 4: protective coating
- 51: first connection means
- 52: second connection means
- 53: holder
- 55: wiring
- 56: transmitter
- 6: sensor region
- 7: excitation source
- 8: remote communication unit
- 9: coating damage
- A: exterior around the transformer system in the field
- E: excitation radiation
- L: luminescence
- 5: method step

## Claims

1. An electric system (1) comprising a static electric induction device (2) and a corrosion-sensitive coating (31), wherein
- the electric system (1) further comprises a protective coating (4) to protect a component (21, 22, 23, 24, 25) of the electric system (1) from an exterior (A) of the electric system (1),
- the corrosion-sensitive coating (31) comprises a luminescent material (30) and is applied on a substrate (34) of the component (21, 22, 23, 24, 25) so that the corrosion-sensitive coating (31) is located between the substrate (34) and the protective coating (4), and
- the luminescent material (30) is configured to emit luminescence (L) upon activation by at least one of a change of a pH value or occurrence of metal ions caused by corrosion of the substrate (34) so that the corrosion-sensitive coating (31) is configured to provide information about a corrosion state of the component (21, 22, 23, 24, 25).

2. The electric system (1) according to the preceding claim, wherein, before the corrosion of the substrate (34) starts, the luminescent material (30) is inactive so that because of the corrosion the luminescent material (30) is changed in its chemical composition and/or in its structural formula.

3. The electric system (1) according to any one of the preceding claims,
wherein in intended use of the electric system (1) the exterior (A) is a gas comprising oxygen and water vapor, and wherein the static electric induction device (2) is a transformer and the component is selected from the following group: transformer tank (21), radiator (22), conservator tank (23), control box (24), bushing turret (25).

4. The electric system (1) according to any one of the preceding claims,
wherein the corrosion-sensitive coating (31) is a primer coating the luminescent material (30) is added to,
wherein the substate (34) comprises at least one of iron or aluminum,
wherein the protective coating (4) is free of the luminescent material (30).

5. The electric system (1) according to any one of the preceding claims,
wherein the corrosion-sensitive coating (31) further comprises one or a plurality of the following: a polyolefin or a modified polyolefin, a silane, a cyanate, a phosphate.

6. The electric system (1) according to any one of the preceding claims,
further comprising an intermediate coating (37) located between the corrosion-sensitive coating (31) and the protective coating (4),
wherein the intermediate coating (37) is free of the luminescent material (30) and comprises one or a plurality of the following: an epoxide, a polyurethane.

7. The electric system (1) according to any one of the preceding claims,
wherein the luminescent material (30) is pH-sensitive and comprises or is one or a plurality of the following:
triphenylmethane, coumarin, fluorescein-5-isothiocyanate, FD1, 5,6-carboxy fluorescein, salicylic acid, eosin, or
the luminescent material (30) is sensitive to the occurrence of at least one of Fe²⁺, Fe³⁺ or Al³⁺ and comprises or is one or a plurality of the following: alizarin, lumogallion, morin, 0,0'-dihydroxyazobenzene, 8-hydroxyquinoline, 8-hydroxyquinolone-5-sulphonic acid hydrate.

8. The electric system (1) according to any one of the preceding claims,
further comprising a corrosion sensor (3) which comprises the luminescent material (30) and further comprises a photo receiver (36) and an excitation source (7),
wherein the excitation source (7) is configured to illuminate the luminescent material (30) with excitation radiation (E) and the photo receiver (36) is configured to detect the luminescence (L) from the luminescent material (30) caused by the excitation radiation (E) upon the corrosion of the substrate (34).

9. The electric system (1) according to the preceding claim, wherein the protective coating (4) is opaque both to the luminescence (L) and the excitation radiation (E).

10. The electric system (1) according to claim 8,
wherein the protective coating (4) is transmissive for at least part of the luminescence (L) and for at least part of the excitation radiation (E).

11. The electric system (1) according to any one of the preceding claims,
wherein the corrosion-sensitive coating (31) is applied directly on the substrate (34),
wherein the corrosion-sensitive coating (31) is a homogeneous layer concerning its material composition.

12. The electric system (1) according to any one of the preceding claims,
wherein an outward hull of the component (21, 22, 23, 24, 25) is made of the substrate (34) covered by the protective coating (4),
wherein an area proportion of at least 80% of the outward hull is provided with the corrosion-sensitive coating (31).

13. The electric system (1) according to any one of the preceding claims,
further comprising a remote communication unit (8) and a transmitter (56),
wherein the transmitter (56) located at or adjacent to the component (21, 22, 23, 24, 25) and is configured to send the information about the corrosion state of the component (21, 22, 23, 24, 25) to the remote communication unit (8), and wherein a distance between the remote communication unit (8) and the transmitter (56) is at least 1 km.

14. The electric system (1) according to any one of the preceding claims,
comprising a plurality of the components (21, 22, 23, 24, 25) and of the protective coatings (4), each of the components (21, 22, 23, 24, 25) being provided with one of the protective coatings (4) and the protective coatings (4) differ from one another,
wherein each one of the components (21, 22, 23, 24, 25) is provided with the luminescent material (30) or with one of a plurality of different luminescent materials (30).

15. A corrosion determination method for an electric system (1) according to any one of the preceding claims comprising the following steps:
- providing the component (21, 22, 23, 24, 25), the corrosion-sensitive coating (31) and the protective coating (4),
- monitoring the corrosion-sensitive coating (31), and
- outputting the information about the corrosion state of the component (21, 22, 23, 24, 25).
